(19)

Europäisches
Patentamt

European
Patent Office

Office européen
des brevets

(11) **EP 3 859 709 B1**

(12) **EUROPEAN PATENT SPECIFICATION**

(45) Date of publication and mention
of the grant of the patent:
**01.01.2025 Bulletin 2025/01**

(21) Application number: **20154497.0**

(22) Date of filing: **30.01.2020**

(51) International Patent Classification (IPC):
*G08G 1/16* (2006.01)     *G08G 1/0967* (2006.01)
*B60W 30/08* (2012.01)     *B60W 30/18* (2012.01)
*H04W 4/02* (2018.01)     *H04W 4/029* (2018.01)
*H04W 4/46* (2018.01)     *H04W 4/80* (2018.01)

(52) Cooperative Patent Classification (CPC):
**G08G 1/096725; B60W 30/18163; G08G 1/096791;
G08G 1/162; G08G 1/166; G08G 1/167;
H04W 4/029; H04W 4/46; H04W 4/80;
B60W 2556/65; B60W 2756/10; H04W 4/023**

(54) **METHOD FOR PLANNING A COOPERATIVE DRIVING MANEUVER, CORRESPONDING CONTROL UNIT AND VEHICLE EQUIPPED WITH A CONTROL UNIT AS WELL AS COMPUTER PROGRAM**

VERFAHREN ZUR PLANUNG EINES KOOPERATIVEN FAHRMANÖVERS, ZUGEHÖRIGE STEUERUNGSEINHEIT UND MIT EINER STEUERUNGSEINHEIT AUSGESTATTETES FAHRZEUG SOWIE COMPUTERPROGRAMM

PROCÉDÉ DE PLANIFICATION D'UNE MANOEUVRE DE CONDUITE COOPÉRATIVE, UNITÉ DE COMMANDE CORRESPONDANTE ET VÉHICULE ÉQUIPÉ D'UNE UNITÉ DE COMMANDE AINSI QUE D'UN PROGRAMME INFORMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.08.2021 Bulletin 2021/31**

(73) Proprietor: **VOLKSWAGEN AG**
**38440 Wolfsburg (DE)**

(72) Inventors:
• **Pfadler, Andreas**
**13357 Berlin (DE)**
• **Lehmann, Bernd**
**38444 Wolfsburg (DE)**
• **Jornod, Guillaume**
**10245 Berlin (DE)**

(74) Representative: **2SPL Patentanwälte PartG mbB**
**Landaubogen 3**
**81373 München (DE)**

(56) References cited:
• **XU WENBO ET AL: "Autonomous Maneuver Coordination Via Vehicular Communication", 2019 49TH ANNUAL IEEE/IFIP INTERNATIONAL CONFERENCE ON DEPENDABLE SYSTEMS AND NETWORKS WORKSHOPS (DSN-W), IEEE, 24 June 2019 (2019-06-24), pages 70 - 77, XP033602308, DOI: 10.1109/DSN-W.2019.00022**
• **HAFNER MICHAEL R ET AL: "Cooperative Collision Avoidance at Intersections: Algorithms and Experiments", IEEE TRANSACTIONS ON INTELLIGENT TRANSPORTATION SYSTEMS, IEEE, PISCATAWAY, NJ, USA, vol. 14, no. 3, 1 September 2013 (2013-09-01), pages 1162 - 1175, XP011525555, ISSN: 1524-9050, [retrieved on 20130829], DOI: 10.1109/TITS.2013.2252901**
• **ANTONIO CASIMIRO ET AL: "Membership-based Manoeuvre Negotiation in Autonomous and Safety-critical Vehicular Systems", ARXIV.ORG, CORNELL UNIVERSITY LIBRARY, 201 OLIN LIBRARY CORNELL UNIVERSITY ITHACA, NY 14853, 11 June 2019 (2019-06-11), XP081376035**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- XUE YANG ET AL: "A vehicle-to-vehicle communication protocol for cooperative collision warning", MOBILE AND UBIQUITOUS SYSTEMS: NETWORKING AND SERVICES, 2004. MOBIQUIT OUS 2004. THE FIRST ANNUAL INTERNATIONAL CONFERENCE ON BOSTON, MA, USA AUG. 22-26, 2004, PISCATAWAY, NJ, USA,IEEE, 22 August 2004 (2004-08-22), pages 114 - 123, XP010721025, ISBN: 978-0-7695-2208-1
- ZIMMERMANN MARKUS ET AL: "A multimodal interaction concept for cooperative driving", 2013 IEEE INTELLIGENT VEHICLES SYMPOSIUM (IV), IEEE, 23 June 2013 (2013-06-23), pages 1285 - 1290, XP032501946, ISSN: 1931-0587, [retrieved on 20131010], DOI: 10.1109/IVS.2013.6629643
- LEHMANN BERND ET AL: "A Generic Approach towards Maneuver Coordination for Automated Vehicles", 2018 21ST INTERNATIONAL CONFERENCE ON INTELLIGENT TRANSPORTATION SYSTEMS (ITSC), IEEE, 4 November 2018 (2018-11-04), pages 3333 - 3339, XP033470090, ISBN: 978-1-7281-0321-1, [retrieved on 20181207], DOI: 10.1109/ ITSC.2018.8569442

**Description**

The disclosure relates to the field of cooperative driving maneuvers supported by means of vehicle to vehicle communication. The disclosure further relates to a corresponding control unit, and a vehicle being equipped with such control unit as well as a corresponding computer program.

Autonomous driving (sometimes referred to as automatic driving, automated driving or piloted driving) is the movement of vehicles, mobile robots and driverless transport systems which are largely autonomous. There are different degrees of autonomous driving. In this case, autonomous driving is also spoken at certain levels even if a driver is still present in the vehicle, who possibly only takes over the monitoring of the automatic driving operation. In Europe, the various transport ministries (in Germany, the Federal Institute for Road Systems (Bundesanstalt für Straßenwesen) was involved) worked together and defined the following autonomous stages. A slightly different categorization is available from the society of automotive engineers.

- Level 0: "Driver only", the driver drives himself, steers, gives gas, brakes, etc..
- Level 1: Certain assistance systems help with vehicle operation (including a cruise control system - Automatic Cruise Control ACC).
- Level 2: Partial automation. Therein, automatic parking, tracking function, general longitudinal guidance, acceleration, deceleration, etc. are taken over by the assistance systems (including collision avoidance).
- Level 3: High automation. The driver does not have to monitor the system continuously. The vehicle independently performs functions such as the triggering of the turn signal, lane change and tracking. The driver can turn to other things, but if requested, the system is requested to take over the lead within a pre-warning period. This form of autonomy is technically feasible on motorways. Legislators are working to allow Level 3 vehicles. The legal framework has already been created.
- Level 4: Full automation. The guidance of the vehicle is permanently adopted by the system. If the system is no longer able to handle the tasks, the driver can be asked to take the lead.
- Level 5: No driver required. Apart from setting the target and starting the system, no human intervention is required.

Future cooperative driving applications are envisioned to significantly improve efficiency and comfort of automated driving. Increase in cooperation between vehicles pose specific requirements on communication systems and the way messages are exchanged among cooperating vehicles. The field of use, where the invention is concerned with, is from Level 2 onwards and concerns the important aspect of cooperative driving maneuvers. Such applications more in particular the cooperative collision avoidance pose very strict requirements on the overall time to build a cooperative decision and require simple, reliable and efficient solution.

The automated vehicles broadcast their future paths as trajectories. A path is an ordered set of spatial points. A trajectory is a path with a time plan, generally for a fixed time period, e.g. 10 s. As a result, the distance covered by the planned trajectory will depend on the speed, which is determined by the time plan. The coordination of the manoeuvres among a group of vehicles is operated through negotiations. These negotiations are supported by the exchange of maneuver coordination messages (MCM). The MCM will consist of a planned trajectory and a desired trajectory. The idea behind the desired trajectory is that other vehicles may accept the desired trajectory from one partner and adapt their planned trajectory. Depending on the number of communication partners and their trajectories, the complexity for the negotiation phase varies. The higher the number of communication partners the longer the negotiation may need.

In these systems, an exact position determination of the vehicle from stage to stage is important as well as a precise observation of the surroundings of the vehicle. In particular, position determination techniques are known which take into account absolute position data and odometry position data in determining the estimated position of the motor vehicle.

In this case, the absolute position data indicate the measured position of the motor vehicle at a certain time in absolute values, for example in a UTM or WGS84 reference coordinate system. Optionally, the absolute position data may also be provided with an orientation, e.g. a current direction of movement of the motor vehicle. A combination of position and orientation is often referred to as a pose. The position is usually expressed two-dimensionally in a Cartesian coordinate system.

For the cooperative or autonomous driving, the exchange of certain messages of the vehicles among each other is very important. Such information included in messages may be position information, surroundings information, trajectory information, warning information, control information and more.

US 2019/0207800 A1 relates to the field of network communications technologies, and in particular, to IEEE 802.11p protocol-based vehicle-to-roadside and vehicle-to-vehicle communication test methods oriented to the Internet of Vehicles. The proposal relates to sending, by the host vehicular communication unit, a throughput test request data packet to the target vehicular communication unit, and starting a timer with it as a period after receiving the throughput test request data packet.

From KR 2017120420 A1 a vehicle-to-vehicle tester for use in a transmission and reception testing system including a testing method is known.

An overview of the different phases of maneuver coordination for automated vehicles is found in the article "A generic approach towards maneuver coordination for automated vehicles" from Bernd Lehmann, Hendrik-Jörn Günther and Lars Wolf, 2018 21st International Conference on Intelligent Transportation Systems (ITSC). IEEE, 2018.

The inventors identified different problems with these approaches described above. The main challenge with the approach described in the article "A reference architecture for CISS/CDAS within the field of cooperative driving" is that it requires extensive message exchange among partners within a very short time over an error prone communication network.

XU WENBO et al. describe in "Autonomous Maneuver Coordination Via Vehicular Communication", 2019 49TH ANNUAL IEEE/IFIP INTERNATIONAL CONFERENCE ON DEPENDABLE SYSTEMS AND NETWORKS WORKSHOPS (DSN-W), IEEE, 24 June 2019 (2019-06-24), pages 70-77, XP033602308, DOI: 10.1109/DSN-w.2019.00022 a communication protocol based on which a cooperative driving maneuver is acknowledged between vehicles and their respective trajectories during a negotiation phase. Details of this communication protocol have been described already above. The described consensus mechanism prevents a collision between requesting and accepting vehicles. The coordination protocol is mentioned as time-safer in relation to situations without any coordination.

HAFNER MICHAEL R ET AL describe in "Cooperative Collision Avoidance at Intersections: Algorithms and Experiments" IEEE TRANSACTIONS ON INTELLIGENT TRANSPORTATION SYSTEMS, IEEE, PISCATAWAY, NJ, USA, vol. 14, no. 3, 1 September 2013 (2013-09-01), pages 1162-1175, XP01 1525555, ISSN: 1524-9050, DOI: 10.1109/TITS.2013.2252901 a fault-tolerant negotiation-based intersection Crossing protocol. Rigorous analytic proofs are used for demonstrating the correctness and faulttolerance properties. Experimental results validate the correctness proof via detailed Computer simulations and provide a preliminary evaluation of the System performances.

ANTONIO CASIMIRO ET AL describe in "Membership-based Manoeuvre Negotiation in Autonomous and Safety-critical Vehicular Systems", ARXIV.ORG, CORNELL UNIVERSITY LIBRARY, 201 OLIN LIBRARY CORNELL UNIVERSITY ITHACA, NY 14853, 11 June 2019 (2019-06-1 1), XP081376035, vehicle-to-vehicle (V2V) communication technology to implement computationally efficient decentralized algorithms for two-vehicle cooperative collision avoidance at intersections.

XUE YANG ET AL describe in "A vehicle-to-vehicle communication protocol for cooperative collision warning", MOBILE AND UBIQUITOUS SYSTEMS: NETWORKING AND SERVICES, 2004. MOBIQUIT OUS 2004. THE FIRST ANNUAL INTERNATIONAL

CONFERENCE ON BOSTON, MA, USA AUG. 22-26, 2004, PISCATAWAY, NJ, USA,IEEE, 22 August 2004 (2004-08-22), pages 1 14-123, XP010721025, ISBN: 978-0-7695-2208-1 a vehicle-to-vehicle communication protocol for cooperative collision warning. Emerging wireless technologies for vehicle-to-vehicle (V2V) and vehicle-to-roadside (V2R) Communications such as DSRC are promising to dramatically reduce the number of fatal road-way accidents by providing early warnings. One major technical challenge addressed in this paper is to achieve low-latency in delivering emergency warming in various road situations.

Cooperation messages are usually meant to negotiate a cooperation in a certain time gap; hence this process is constrained in time. This time is not constant and depends on several parameters such as the relative speed between vehicles and the validity time of the desired maneuver. It does not make sense to send a request message for a cooperative maneuver if the negotiation time is greater than the validity time of the desired maneuver. In other words, it is not efficient if the vehicle requests a cooperative maneuver although it knows in advance that the remaining time for negotiation is not sufficient. On the other hand, vehicles which receive that request message should not agree on the negotiation if there is not enough time to perform the negotiation with regard to the validity time of the desired trajectory.

The problem with such cooperative maneuvers therefore is that the negotiation phase may expire during negotiation and this could lead to an inefficient and longer lasting maneuver. A further problem is related with the increase of the amount of V2V-communications for the planning of cooperative maneuvers.

There is therefore a need for an improved approach for the negotiation phase of cooperative driving maneuvers which avoids the above mentioned disadvantages. This corresponds to the problem of the invention.

This object is achieved by a method for planning a cooperative driving maneuver according to claim 1, a computing unit according to claim 10, a vehicle according to claim 11 and a computer program according to claim 12. The dependent claims include advantageous further developments and improvements of the invention as described below.

The solution according to the invention comprises a method for planning a cooperative driving maneuver, according to appended claim 1.

This solution has the advantage that inefficient cooperative driving maneuvers are avoided. This could happen if the negotiation phase for the cooperative driving maneuver is started but needs to be stopped before the negotiation phase is finished. A reason for this might be that the requesting vehicle has missed the entry point into the desired trajectory before the negotiation phase has come to an end. Therefore, in an enhanced embodiment it is advantageous if the method further comprises a step of determining a branch point corresponding to a point lying commonly on both the planned trajectory and the desired trajectory. This branch point is further characterized that from this point on the planned and the desired trajectory separate even though it is allowed that they merge again later on. The method then further comprises a step of checking if the vehicle will reach the branch point before the negotiation phase is over according to the determined timeout value and if yes, it follows a step of terminating the planning of the cooperative driving maneuver and not sending out said cooperative driving maneuver request message.

For the determination of the timeout value it is advantageous that the method comprises a step of determining the number of vehicles involved in the cooperative driving maneuver. Then it is advantageous to add the typical time for deciding on the acceptance or rejection of the cooperative driving maneuver to the typical one-way trip time required for sending a message from one vehicle to another multiplied by the number of vehicles involved in the cooperative driving maneuver to calculate the negotiation time for the cooperative driving maneuver. The number of vehicles involved corresponds to the number of vehicles from which a response to the cooperative driving maneuver request message is due. It is noted, that not the time for deciding on the acceptance or rejection of the cooperative driving maneuver is multiplied with the number of involved vehicles, since the deciding process will be performed in parallel in the involved vehicles.

In addition, it is advantageous that the typical round trip time for the internal network transfer in the vehicle having sent out the cooperative driving maneuver request message is added to the negotiation time. This solution has the advantage that the negotiation time needed under the perspective of the vehicle having sent out the cooperative driving maneuver request message is relatively accurately determined.

The accuracy of the negotiation time can be further increased if in the vehicle having sent out the cooperative driving maneuver request message the typical one-way trip time required for sending a message from one vehicle to another is adapted to the current estimation of the quality of service of the V2V radio communication.

The determined negotiation time can be advantageously used in the vehicle having sent out the cooperative driving maneuver request message in the following way: First, the timeout value is set to the overall negotiation time when it is found that the requesting vehicle will reach the branch point before the overall negotiation time is over. This timeout value is entered into the payload field of the cooperative driving maneuver request message. With the timeout value entered in the cooperative driving maneuver request message the involved vehicles are informed about the timeout value for the negotiation phase of the cooperative driving maneuver.

It is also advantageous that in the payload field of the cooperative driving maneuver request message also the planned trajectory and the desired trajectory is entered to inform the involved vehicles about the planned cooperative driving maneuver.

Likewise, it is advantageous that an involved vehicle performs a step of checking the timeout value in the received cooperative driving maneuver request message. When it finds that the typical time for deciding on the acceptance or rejection of the cooperative driving maneuver is longer than the reported timeout value, it will stop negotiating about the cooperative driving maneuver. To inform the requesting vehicle, the involved vehicle will transmit back to the requesting vehicle a message in which the cooperative driving maneuver is rejected.

Another embodiment of the invention concerns a control unit, which is adapted to perform the steps of the method according to the invention.

Likewise, a vehicle, which is equipped with such a control unit corresponds to a further embodiment of the invention.

Moreover, a computer program having program steps which, when the program is processed by a computing unit, cause it to carry out the method according to the invention is another embodiment according to the invention.

An exemplary embodiment of the invention is illustrated in the drawings and is explained in more detail below with reference to the figures.

In the drawings:

Fig. 1    the principle of vehicle communication via mobile radio;
Fig. 2    an example of a cooperative driving scenario in which one vehicle requests a cooperative driving maneuver by sending its planned and desired trajectory in a cooperative driving maneuver request message to surrounding vehicles;
Fig. 3    a representation of a desired trajectory in front of a moving vehicle;
Fig. 4    shows a block diagram for a vehicle's board electronics network with various vehicle electronics components;
Fig. 5    the format of a maneuver coordination request message;
Fig. 6    a flow chart of a computer program for estimating the negotiation time needed for negotiating the cooperative driving maneuver among the involved vehicles; and

Fig. 7    an example of the message exchange between the involved vehicles of a cooperative driving maneuver according to a cooperation protocol (left) and the time lines (right) for the performance.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

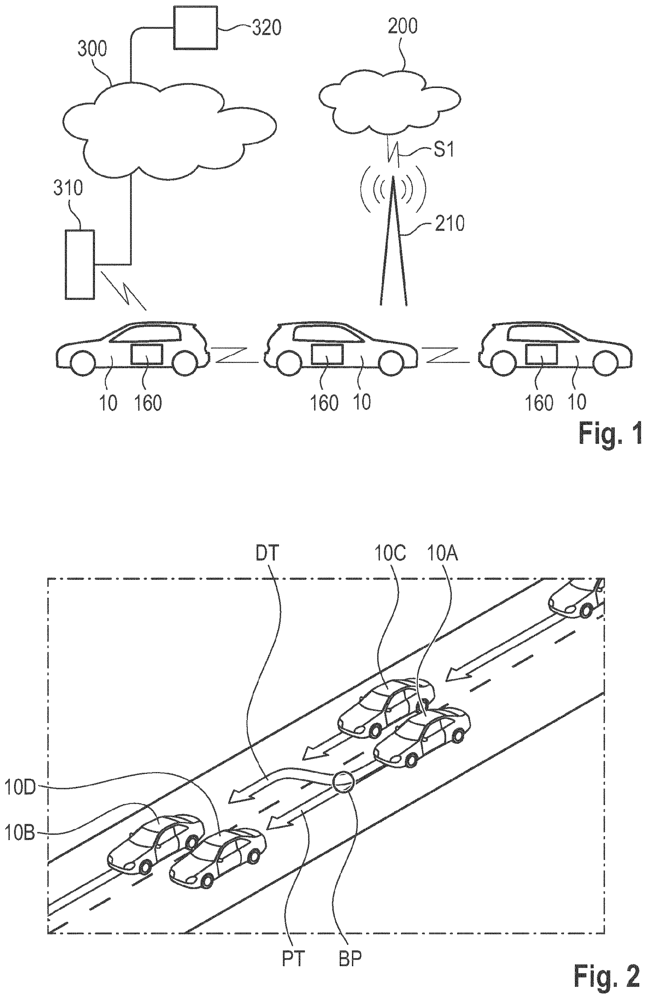

FIG. 1 shows the principle of vehicle communication using mobile radio. The vehicles are labeled with reference number 10. The term vehicle is to be understood as a collective term for motor vehicles with an internal combustion engine or an electric motor, whether for bicycles with or without an electric motor or other vehicles powered by muscle, or for vehicles with one, two, four or more wheels. Whether for motorcycles, passenger cars, trucks, buses, agricultural vehicles or construction machines. The list is not exhaustive and includes other vehicle categories.

Since automated driving is on the rise, a lot more data needs to be exchanged among the road participants and also between the road participants and the network. The communication systems for V2V and V2X communication need to be adapted correspondingly. The 3GPP standard setting organisation has been and is releasing features for the new generation of the 5G cellular mobile communication system, including vehicle-to-everything (V2X) features. A large panel of vehicular use cases have been designed, ranging from infotainment to cooperative driving. When it comes to safety-related time-critical applications such as cooperative driving these requirements are the exchange of information with low latency, high data rate and high reliability. In LTE, according to Long Term Evolution, the V2X communication is called LTE-V, in the case of the 5G initiative this variant is called PC5. Another approach for implementing V2X-communication is based on the WLAN-standard IEEE 802.11p.

In Fig. 1, the vehicles are each equipped with a communication module 160, which serves as a transmitting and receiving unit for communication in a mobile radio network. The vehicle 10 here corresponds to a mobile radio network subscriber station because of the integrated communication module 160. All messages from the vehicles (uplink) and to the vehicles (downlink) are routed either via a base station 210 which serves a mobile radio cell or, in the case of direct vehicle communication (sidelink), directly between the vehicles 10. If the vehicles 10 are within this mobile radio cell, they are registered or logged in at the base station 210. If they leave the mobile cell, they are handed over to the neighboring cell (handover) and accordingly logged out or logged off at the base station 210. The base station 210 also provides access to the Internet so that the vehicles 10 or all other mobile radio subscribers are supplied with the Internet data in the mobile radio cell. For this purpose, the base station 210 is connected to the EPC 200 (Evolved Packet Core) via the so-called S1 interface. A backend server 320 is also accessible via the Internet 300 or another wide area network WAN. This may be located in a traffic control center to which e.g. some of the position data or trajectory information of the individual vehicles 10 may be reported.

Finally, an infrastructure network component is also shown. This may be exemplified by a road-side unit RSU 310. For the ease of implementation, it is considered that all components have assigned an Internet address, typically in the form of an IPv6 address, such that the packets transporting messages between the components can be routed correspondingly. When the V2X-communication is implemented based on WLAN p, the vehicles may also exchange information with the road side units 310.

Fig. 2 shows an example of a cooperative driving scenario. Fig. 2 shows five vehicles. The vehicle 10A is driving on the left lane of the road having two lanes in each direction. In front of vehicle 10A there is located vehicle 10D which has breakdown. Vehicle 10A therefore needs to change to the second lane in order to pass vehicle 10D having a breakdown. Vehicle 10C is driving slightly behind vehicle 10A on the second lane and vehicle 10B is driving in front of vehicle 10C on the second lane. Vehicle 10A seeks for a cooperative driving maneuver with vehicle 10C and sends out a cooperation request message to the surrounding vehicles. This message is called a maneuver coordination message MCM. Such MCM messages are broadcast via a broadcast channel of the mobile radio system. Other vehicles are taking into account the timeout of this cooperation request. The timeout value in the MCM message is the time until when the requesting vehicle 10A needs to receive an answer.

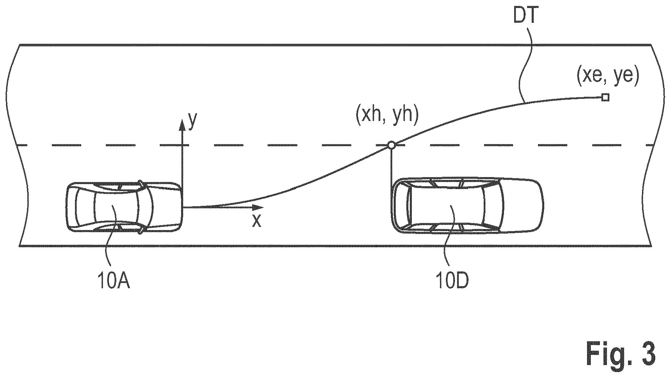

Fig. 3 shows a vehicle 10A and illustrates how its own possible movement in the future could be described. The predicted self-movement is described by a desired vehicle trajectory DT within the next few seconds. A typical time period of a trajectory is 10 s. Fig. 2 shows a cooperative driving maneuver where the requesting vehicle 10A has a planned trajectory available which is labelled PT. The planned trajectory PT describes the planned movement from the 1$^{st}$ driving lane to the 2$^{nd}$ driving lane of the road. Of course, since vehicle 10A has recognized that vehicle 10D is blocking the way on the 1$^{st}$ lane, vehicle 10A determines another trajectory, which allows vehicle 10A to avoid the blocking situation. This alternative trajectory is named desired trajectory and is labelled with reference sign DT. Fig. 3 illustrates the trajectory DT consists in a number of successive locations up to the point $(x_e, y_e)$ provided in a two-dimensional Cartesian coordinate system. The desired trajectory DT describes a path on which vehicle 10A could change to the 2$^{nd}$ lane on which vehicles 10B and 10C are already driving, see Fig. 2. Since vehicle 10C is very close to vehicle 10A, an immediate change to the 2$^{nd}$ lane is not possible and therefore, vehicle 10A needs to request a cooperative driving maneuver. For this vehicle 10A broadcasts its desired trajectory DT to the surrounding vehicles in the MCM message.

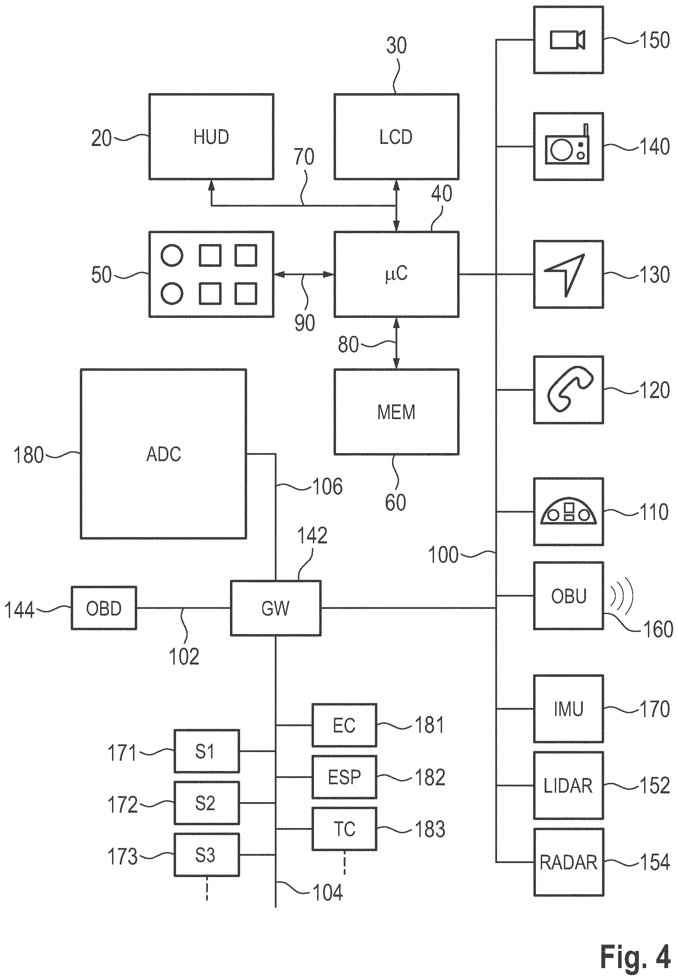

Fig. 4 shows schematically a block diagram of the vehicle's 10A board electronics system. Also the vehicles 10B to 10D may be equipped with the same kind of board electronics system. It is considered that the vehicle 10A is equipped with autonomous driving capability. Also the vehicles 10B to 10D may be equipped with autonomous driving capability. Part of the board electronics system is an infotainment system which comprises: a head-up display 20, the touch-sensitive display unit 30, a computing device 40, an input unit 50, and a memory 60. The display unit 30 includes both a display area for displaying variable graphical information and an operator interface (touch-sensitive layer) arranged above the display area) for inputting commands by a user. The memory device 60 is connected to the computing device 40 via a further data line 80. In the memory 60, a pictogram directory and / or symbol directory is deposited with the pictograms and / or symbols for possible overlays of additional information.

The other parts of the infotainment system such as camera 150, radio 140, navigation device 130, telephone 120 and instrument cluster 110 are connected via the data bus 100 with the computing device 40. However, the modern vehicle 10 can also have further components such as further surroundings scanning sensors like a LIDAR (Light Detection and Ranging) sensor 152 or RADAR (Radio Detection and Ranging) sensor 154 and more video cameras 150, e.g. as a front camera, rear camera or side camera. Such sensors are used more and more in vehicles for surroundings observation. The RADAR and LIDAR sensors 152, 154 could be used for scanning a range up to 150 m or 250 m and the cameras 150, 151 cover a range from 30 to 120 m. Moreover, also an inertial measurement unit 170 is connected with the communication bus 100. It may be used as part of the odometry of the vehicle in order to improve the accuracy of the positioning system of the vehicle.

As data bus 100 the high-speed variant of the CAN bus according to ISO standard 11898-2 may be taken into consideration. Alternatively, for example, the use of an Ethernet-based bus system such as IEEE 802.03cg is another example. Bus systems in which the data transmission via optical fibers happens are also usable. Examples are the MOST Bus (Media Oriented System Transport) or the D2B Bus (Domestic Digital Bus). For inbound and outbound wireless communication, the vehicles 10A - 10D are equipped with a communication module 160. It can be used for mobile communication, e.g. mobile communication according to the 5G standard and/or communication based on the WLAN p communication system.

Reference numeral 181 denotes an engine control unit. The reference numeral 182 corresponds to an ESC control unit corresponding to electronic stability control and the reference numeral 183 denotes a transmission control unit. The networking of such control units, all of which are allocated to the category of the drive train, typically occurs with the CAN bus system (controller area network) 104. Since various sensors are installed in the motor vehicle and these are no longer only connected to individual control units, such sensor data are also distributed via the bus system 104 to the individual control devices.

Further control devices, such as an automatic driving control unit ADC 180, etc. may be provided in the vehicles 10A to 10D. The Ethernet-Bus may be a choice for this communication bus 106 due to its higher bandwidth for data transport. One Ethernet-Bus adapted to the special needs of car communication is standardized in the IEEE 802.1Q specification. Moreover, a lot of information for surroundings observation may be received via V2V communication from other road participants. Particularly for those road participants not being in line of sight LOS to the observing vehicle it is very advantageous to receive the information about their position and motion via V2V communication.

Reference number 190 denotes an on-board diagnosis interface.

For the purpose of transmitting the vehicle-relevant sensor data desired trajectories etc. via the communication interface 160 to another vehicle 10 or to the backend server 320, a gateway 142 is provided. This is connected to the different bus systems 100, 102, 104 and 106. The gateway 142 is adapted to convert the data it receives via the one bus into the transmission format of the other bus so that it can be distributed in the packets specified there. For the forwarding of this data to the outside, i.e. to another vehicle 10 or to control central computer 320, the on-board unit 160 is equipped with the communication interface to receive these data packets and, in turn, to convert them into the transmission format of the correspondingly used mobile radio standard. The gateway 142 takes all the necessary format conversions if data are to be exchanged between the different bus systems if required.

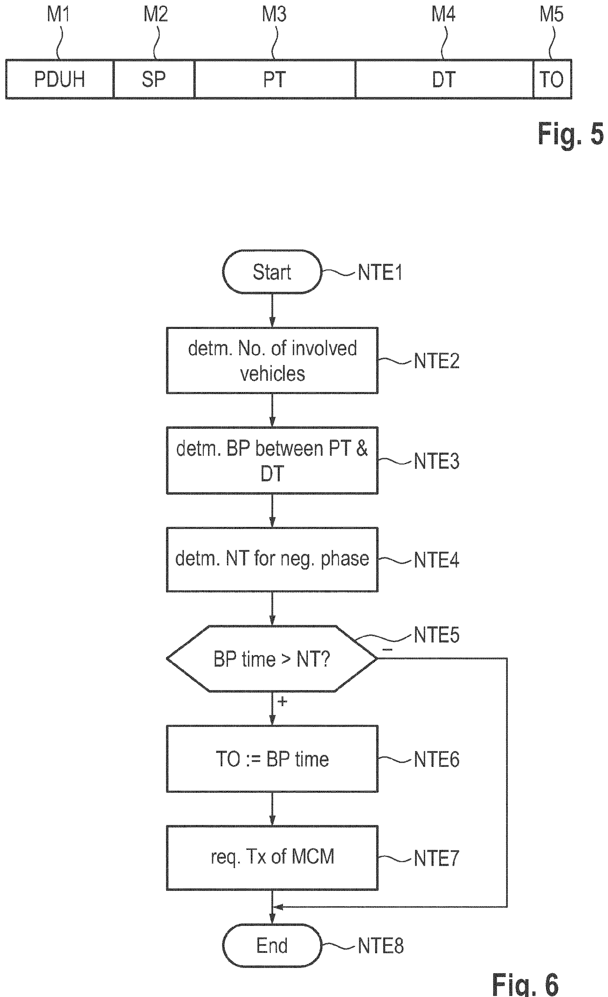

When vehicle 10A is planning the cooperative maneuver the ADC unit 180 calculates the desired trajectory DT. It also transfers the desired trajectory DT to the communication module 160 via gateway 142 and requests the transmission of an MCM message with the desired trajectory DT. The format of the MCM message is depicted in Fig. 5.

In the header field M1 of the MCM message it is contained the PDU Header for the MCM message with entries for the protocol version, the message identifier and the station identifier sending out the MCM message. In the first payload field M2 the starting point SP is included with the position information e.g. in WGS84 coordinate system, the lane position and the time information when the message has been formed. In the second payload field M3 the planned trajectory PT is entered. The third payload field M4 contains the desired trajectory DT. As mentioned above the planned and desired trajectories may span a time period of future vehicle movement of 5 to 10 s. Optionally, after the payload fields there might be used a further field with an error code for protecting the message against errors (not shown).

The MCM message will be broadcast to the surrounding vehicles. In the WLAN p communication system a broadcast channel may be used for that purpose. The surrounding vehicles 10B - 10D when receiving the MCM message from vehicle 10A need to check if the desired trajectory DT from vehicle 10A is acceptable for them. Thereafter, they will inform vehicle 10A whether they will accept the desired trajectory DT or whether they will refuse the desired trajectory DT. Therefore, with the sending of the MCM message with the request for a cooperative driving maneuver from vehicle 10A a negotiation phase is started which ends with the acceptance of the desired trajectory DT or the refusal of the desired trajectory DT.

According to an embodiment of the invention there is a process of estimating a timeout value for the negotiation phase of the cooperative maneuver, which limits the negotiation phase to a certain amount. The estimation of the timeout value is preferably performed in the ADC unit 180 of vehicle 10A. How the timeout estimation will be performed is illustrated in the flow chart of Fig. 6. The process starts in step NTE1. In step NTE2 the algorithm determines the amount of vehicles involved in the requested cooperative driving maneuver. This can be performed by checking the positions of the surrounding vehicles and their corresponding velocities. It is noted that the positions, velocities and the planned trajectories are exchanged between the neighboring vehicles in common awareness messages CAM. By checking the positions and speeds of the surrounding vehicles it will be found that vehicle 10B and 10C are involved in the cooperative driving maneuver which is illustrated in Fig. 2. In step NTE3 vehicle 10A determines the branch point BP between the planned trajectory PT and the desired trajectory DT. The branch point is the location on the two trajectories where the desired trajectory DT starts to deviate from the planned trajectory. When this branch point BP is determined, the point in time when the vehicle 10A reaches the branch point BP is also determined in step NTE3.

In the next step NTE4 the time needed for the negotiation of the cooperative driving maneuver is also estimated. In one embodiment the negotiation time can be estimated in the following manner: First, the typical internal processing time used for deciding on acceptance or rejection of the desired trajectory DT is taken out of the memory in step NTE2. Since the vehicles 10B and 10C receive the MCM message in broadcast form almost at the same time, they perform the checking of acceptance or rejection of the desired trajectory in parallel such that the time will not be doubled if two vehicles are involved. However, what is also to be considered is that each involved vehicle needs to transmit back its answer to the requesting MCM message. Since different resource blocks are assigned to the different vehicles this can be done in parallel and therefore the known one-way trip time for sending the answer needs not to be multiplied with the number of involved vehicles in this embodiment. The latency of the network is however dependent on the current transfer conditions at the location of the respective vehicles. To take this into consideration the vehicle 10A estimates the latency of the network based on the current quality of service the network can provide.

A typical example for the time for deciding about acceptance or rejection of the desired trajectory is 500 ms. It is noted that since the two involved vehicles 10B and 10C receive the MCM message at the same time, they will start deciding about acceptance or rejection of the desired trajectory in parallel. A typical example for the one-way trip time on the WLAN p link is about 100 ms. In addition the vehicle intern network processing latency is to be considered for vehicle 10A. Since the internal message transfer in vehicle 10A takes longer because of the reformatting need in gateway 142, this latency should not be neglected. A typical value for the two-way transfer of internal messages is about 200 ms. In total the negotiation time NT will be calculated by summing-up these values.

$$NT = 500 \text{ ms} + 2 * 100 \text{ ms} + 200 \text{ ms} = 900 \text{ ms.}$$

In the following step NTE5 it will be checked if the estimated negotiation time NT is shorter than the branch point time determined in step NTE4. If yes, vehicle 10A transmits the MCM message. If not, it means that there is not enough negotiation time NT available to decide about the cooperative driving maneuver and vehicle 10A does not send out the requesting MCM message. At the driving situation illustrated in Fig.2 it means vehicle 10A starts braking and waits behind vehicle 10B until the traffic situation allows changing to the 2nd lane. If yes, in step NTE6 the timeout value TO is set to be equal to the calculated negotiation time NT. Then in step NTE7 the MCM message with the set timeout value TO is sent out.

Once the MCM message has been sent out, the two vehicles 10B and 10C need to decide about acceptance or rejection of the cooperative driving maneuver. Thereby, they will take into account the timeout value TO in the field M5 of this maneuver coordination message MCM. The timeout value has the meaning of the time until when the requesting vehicle 10A needs to receive an answer. Also vehicle 10B and 10C perform a step of checking if they can deliver the answer to the MCM message within the set time limit defined by the timeout value. What they know is that they need 500 ms for deciding about the request. They also know about the one-way trip time of 100 ms and the internal message distribution time of 100 ms in vehicle 10A. This way they will find that in total a time of 500 ms + 100 ms + 100 ms is needed and compare the resulting value of 700 ms with the announced timeout value. If they find that there is sufficient time to answer the request they will transmit the acceptance message back to the requesting vehicle 10A. If they find that there is insufficient time to answer the request they will transmit the rejection message back to the requesting vehicle 10A. This way superfluous V2V communication can be avoided.

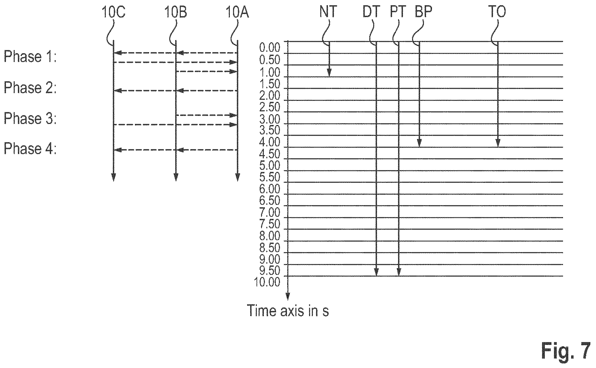

Fig. 7 shows on the left side the different message exchanges for a cooperative driving maneuver. In phase 1 the vehicles 10A, 10B, 10C exchange common awareness messages CAM. This also includes the exchange of their currently planned trajectories PT. In phase 2 vehicle 10A finds that there is a need for a cooperative driving maneuver and sends the MCM message in broadcast form to vehicles 10B and 10C. In phase 3 the vehicles 10B and 10C send their response message to the MCM message back to vehicle 10A. In phase 4 when the two vehicles 10B and 10C have accepted the cooperative driving maneuver, the cooperative driving maneuver is started by means of a broadcast message from vehicle 10A.

On the right side of Fig. 7 different time lines for the cooperative driving maneuver are illustrated. The duration of the desired and planned trajectories is 10 s. The negotiation time has been calculated to be equal to 900 ms. The branch point time is calculated to be equal to 4 s. Finally, the timeout value TO has been set to be equal to 4 s.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

Reference Sign List

| | |
|---|---|
| 10 | Vehicle |
| 10A | 1st Vehicle |
| 10B | 2nd Vehicle |
| 10C | 3rd Vehicle |
| 10D | 4th Vehicle |
| 20 | Head-UP Display |
| 30 | Display Unit |
| 40 | Computing Unit |
| 50 | Operating Panel |
| 60 | Memory |
| 70 | 1st Data Bus |
| 80 | 2nd Data Bus |
| 90 | 3rd Data Bus |
| 100 | High-speed CAN-Bus |
| 102 | Communication Bus |
| 104 | CAN-Bus |
| 106 | Ethernet-Bus |
| 110 | Instrument Cluster |
| 120 | Telephone |
| 130 | Navigation System |
| 140 | Radio |
| 142 | Gateway |
| 150 | Camera |
| 152 | LIDAR Sensor |
| 154 | RADAR Sensor |
| 170 | Inertial Measurement Unit |
| 171 | Sensor 1 |
| 172 | Sensor 2 |
| 173 | Sensor 3 |
| 171 | Driver Assist Control Unit |
| 172 | Radar Device |
| 180 | Automatic Driving Computing Unit |
| 181 | Engine Control Unit |
| 182 | ESC-Control Unit |
| 183 | Transmission Control Unit |
| 200 | Evolved Packet Core EPC |
| 210 | Base Station |
| 300 | Internet |
| 310 | Road Side Unit |
| 320 | Backend Server |
| M1 | Message Header Field |
| M2 | 1st Message Payload Field |
| M3 | 2nd Message Payload Field |
| M4 | 3rd Message Payload Field |
| M5 | 4th Message Payload Field |
| TJ | Trajectory |
| PT | Planned Trajectory |
| DT | Desired Trajectory |
| BP | Branch Point |
| NTE1 - NTE8 | Different Steps Of A Computer Program |

**Claims**

**1.** A computer-implemented method

for planning a cooperative driving maneuver, comprising the steps of observing the surroundings of a vehicle (10A), determining a planned trajectory (PT) the vehicle (10A) drives on for a certain amount of time, determining a desired trajectory (DT) different from the planned trajectory (PT) requiring a cooperative driving maneuver with at least one of the surrounding vehicles (10B, 10C), starting a negotiation phase with said vehicles (10B, 10C) involved in the cooperative driving maneuver by sending a maneuver coordination message (MCM), waiting for the response messages from said involved vehicles (10B, 10C), determining a timeout value (TO) which limits the negotiation phase of said cooperative driving maneuver, and changing to the desired trajectory (DT) if said involved vehicles (10B, 10C) have accepted the desired trajectory (DT) before the negotiation phase has expired according to said timeout value (TO), wherein said timeout value (TO) is entered into a payload field of the maneuver coordination message (MCM) to inform said involved vehicles (10B, 10C) about a timeout value for the negotiation phase of the cooperative driving maneuver.

2. Method according to claim 1, further comprising a step of determining a branch point (BP) corresponding to a point lying on the planned trajectory (PT) and the desired trajectory (DT) at which the planned (PT) and the desired trajectory (DT) separate and checking if the vehicle (10A) will reach the branch point (BP) before the negotiation phase is over according to a determined timeout value (TO) and if yes, terminating the planning of the cooperative driving maneuver and not sending out said maneuver coordination message (MCM).

3. Method according to claim 1 or 2, wherein for the step of determining said timeout value (TO) a step of determining the number of vehicles involved in the cooperative driving maneuver is performed and wherein the typical one-way trip time required for sending a message from one vehicle to another multiplied by the number of vehicles involved in the cooperative driving maneuver is added to the typical time for deciding on the acceptance or rejection of the cooperative driving maneuver to calculate a negotiation time (NT) for the cooperative driving maneuver.

4. Method according to claim 3, wherein the typical round trip time for the internal network transfer in said vehicle (10A) having sent out said maneuver coordination message (MCM) is added to the negotiation time (NT) in order to determine the total negotiation time.

5. Method according to claim 3 or 4, wherein in said vehicle (10A) having sent out said maneuver coordination message (MCM) the typical one-way trip time required for sending a message from one vehicle to another is adapted to the current estimation of the quality of service of the vehicle-to-vehicle radio communication system.

6. Method according to one of claims 3 to 5, wherein in said vehicle (10A) having sent out the cooperative driving maneuver request message said timeout value (TO) is set to the negotiation time (NT) when it is found that said requesting vehicle (10A) will reach the branch point (BP) before the negotiation time (NT) is over.

7. Method according to one of the previous claims, wherein said planned trajectory (PT) and said desired trajectory (DT) is entered into a payload field of the maneuver coordination message (MCM) to inform said involved vehicles (10B, 10C) about the planned cooperative driving maneuver.

8. Method according to one of the previous claims , wherein one of said involved vehicle (10B, 10C) performs a step of checking said timeout value (TO) in the received maneuver coordination message (MCM) and when it finds that the typical time for deciding on the acceptance or rejection of the cooperative driving maneuver is longer than said reported timeout value (TO), said involved vehicle (10B, 10C) will stop negotiating about the cooperative driving maneuver and transmit back to said requesting vehicle (10A) a message in which the cooperative driving maneuver is rejected.

9. Computing unit (180), **characterized in that** the computing unit (180) comprises a processor adapted to perform the steps of one of the previous claims 1 to 8.

10. Vehicle (30), **characterized in that** the vehicle (30) is equipped with a computing unit (180) according to claim 9.

11. Computer program, **characterized in that** the computer program comprises instructions, which when the program is executed by a computing unit (180), cause it to carry out the method according to one of claims 1 to 8.

**Patentansprüche**

1. Computerimplementiertes Verfahren zum Planen eines kooperativen Fahrmanövers, dass die folgenden Schritte umfasst

   Beobachten der Umgebung eines Fahrzeugs (10A), Bestimmen einer geplanten Trajektorie (PT), auf der das Fahrzeug (10A) für eine gewisse Zeitmenge fährt,
   Bestimmen einer gewünschten Trajektorie (DT), die sich von der geplanten Trajektorie (PT) unterscheidet und ein kooperatives Fahrmanöver mit mindestens einem der umgebenden Fahrzeuge (10B, 10C) erfordert,
   Starten einer Verhandlungsphase mit den Fahrzeugen (10B, 10C), die am kooperativen Fahrmanöver beteiligt sind, durch Senden einer Manöverkoordinierungsnachricht (MCM), Warten auf die Antwortnachricht von den beteiligten Fahrzeugen (10B, 10C),
   Bestimmen eines Zeitüberschreitungswertes (TO), der die Verhandlungsphase des kooperativen Fahrmanövers begrenzt, und
   Ändern der gewünschten Trajektorie (DT), wenn die beteiligten Fahrzeuge (10B, 10C) die gewünschte Trajektorie (DT) akzeptiert haben, bevor die Verhandlungsphase gemäß dem Zeitüberschreitungswert (TO) abgelaufen ist,
   wobei der Zeitüberschreitungswert (TO) in ein Nutzdatenfeld der Manöverkoordinierungsnachricht (MCM) eingegeben wird, um die beteiligten Fahrzeuge (10B, 10C) über einen Zeitüberschreitungswert für die Verhandlungsphase des kooperativen Fahrmanövers zu informieren.

2. Verfahren nach Anspruch 1, das ferner einen Schritt des Bestimmens eines Abzweigungspunktes (BP) umfasst, der einem Punkt entspricht, der auf der geplanten Trajektorie (PT) und der gewünschten Trajektorie (DT) liegt und an dem sich die geplante (PT) und die gewünschte Trajektorie (DT) trennen, und Prüfen, ob das Fahrzeug (10A) den Abzweigungspunkt (BP) erreicht, bevor die Verhandlungsphase gemäß einem bestimmten Zeitüberschreitungswert (TO) vorüber ist, und, wenn ja, Beenden der Planung des kooperativen Fahrmanövers und Unterlassen des Sendens der Manöverkoordinierungsnachricht (MCM).

3. Verfahren nach Anspruch 1 oder 2, wobei für den Schritt des Bestimmens des Zeitüberschreitungswertes (TO) ein Schritt des Bestimmens der Anzahl von Fahrzeugen, die am kooperativen Fahrmanöver beteiligt sind, durchgeführt wird und wobei die typische Einwegfahrzeit, die zum Senden einer Nachricht von einem Fahrzeug zu einem anderen erforderlich ist, multipliziert mit der Anzahl von Fahrzeugen, die am kooperativen Fahrmanöver beteiligt sind, zum Entscheiden über die Akzeptanz oder die Zurückweisung des kooperativen Fahrmanövers zur typischen Zeit hinzugefügt wird, um eine Verhandlungszeit (NT) für das kooperative Fahrmanöver zu berechnen.

4. Verfahren nach Anspruch 3, wobei die typische Umlaufzeit für die interne Netzwerkübertragung im Fahrzeug (10A), das die Manöverkoordinierungsnachricht (MCM) gesendet hat, zur Verhandlungszeit (NT) hinzugefügt wird, um die Gesamtverhandlungszeit zu bestimmen.

5. Verfahren nach Anspruch 3 oder 4, wobei im Fahrzeug (10A), das die Manöverkoordinierungsnachricht (MCM) gesendet hat, die typische Einwegfahrzeit, die zum Senden einer Nachricht von einem Fahrzeug zu einem anderen erforderlich ist, an die aktuelle Schätzung der Dienstqualität des Fahrzeug-zu-Fahrzeug-Funkkommunikationssystems angepasst wird.

6. Verfahren nach einem der Ansprüche 3 bis 5, wobei im Fahrzeug (10A), das die Anforderungsnachricht für das kooperative Fahrmanöver gesendet hat, der Zeitüberschreitungswert (TO) auf die Verhandlungszeit (NT) eingestellt wird, wenn festgestellt wird, dass das anfordernde Fahrzeug (10A) den Abzweigungspunkt (BP) erreicht, bevor die Verhandlungszeit (NT) vorüber ist.

7. Verfahren nach einem der vorhergehenden Ansprüche, wobei die geplante Trajektorie (PT) und die gewünschte Trajektorie (DT) in ein Nutzdatenfeld der Manöverkoordinierungsnachricht (MCM) eingegeben werden, um die beteiligten Fahrzeuge (10B, 10C) über das geplante kooperative Fahrmanöver zu informieren.

8. Verfahren nach einem der vorhergehenden Ansprüche, wobei eines der beteiligten Fahrzeuge (10B, 10C) einen Schritt des Prüfens des Zeitüberschreitungswertes (TO) in der empfangenen Manöverkoordinierungsnachricht (MCM) durchführt und wenn das beteiligte Fahrzeug (10B, 10C) feststellt, dass die typische Zeit zum Entscheiden über die Akzeptanz oder die Zurückweisung des kooperativen Fahrmanövers länger ist als der gemeldete Zeitüberschreitungswert (TO), es das Verhandeln über das kooperative Fahrmanöver beendet und eine Nachricht, in der das kooperative Fahrmanöver zurückgewiesen wird, zurück zum anfordernden Fahrzeug (10A) überträgt.

9. Datenverarbeitungseinheit (180), **dadurch gekennzeichnet, dass** die Datenverarbeitungseinheit (180) einen Prozessor umfasst, der angepasst ist, die Schritte des Verfahrens von einem der vorherigen Ansprüche 1 bis 8 durchzuführen.

10. Fahrzeug (30), **dadurch gekennzeichnet, dass** das Fahrzeug (30) mit einer Datenverarbeitungseinheit (180) nach Anspruch 9 ausgerüstet ist.

11. Computerprogramm, **dadurch gekennzeichnet, dass** das Computerprogramm Anweisungen umfasst, die, wenn das Programm von einer Datenverarbeitungseinheit (180) ausgeführt wird, sie veranlassen, das Verfahren nach einem der Ansprüche 1 bis 8 umzusetzen.

**Revendications**

1. Procédé informatique pour prévoir une manoeuvre de conduite coopérative, comprenant les étapes suivantes :

   l'observation des environs d'un véhicule (10A), la détermination d'une trajectoire prévue (PT) suivie par ce véhicule (10A) pendant un certain temps,
   la détermination d'une trajectoire désirée (DT) différente de la trajectoire prévue (PT) nécessitant une manoeuvre de conduite coopérative avec au moins un des véhicules environnants (10B, 10C),
   le commencement d'une phase de négociation avec lesdits véhicules (10B, 10C) impliqués dans la manoeuvre de conduite coopérative en envoyant un message de coordination des manoeuvres (MCM),
   l'attente de l'arrivée des messages de réponse venant desdits véhicules impliqués (10B, 10C),
   la détermination d'une valeur de timeout (TO) qui limite la phase de négociation de ladite manoeuvre de conduite coopérative, et
   le passage à la trajectoire désirée (DT) si lesdits véhicules impliqués (10B, 10C) ont accepté la trajectoire désirée (DT) avant que la phase de négociation n'ait expiré conformément à ladite valeur de timeout (TO),
   ladite valeur de timeout (TO) étant entrée dans un champ de charge utile du message de coordination des manoeuvres (MCM) afin d'informer lesdits véhicules impliqués (10B, 10C) à propos d'une valeur de timeout pour la phase de négociation de la manoeuvre de conduite coopérative.

2. Procédé selon la revendication 1, comprenant en outre une étape de détermination d'un point de branchement (BP) correspondant à un point se trouvant sur la trajectoire prévue (PT) et sur la trajectoire désirée (DT) auquel la trajectoire prévue (PT) et la trajectoire désirée (DT) se séparent et une étape de vérification de si le véhicule (10A) atteindra le point de branchement (BP) avant que la phase de négociation n'ait expiré conformément à une valeur de timeout (TO) déterminée et, si c'est le cas, la terminaison de la prévision de la manoeuvre de conduite coopérative et le non envoi dudit message de coordination des manoeuvres (MCM).

3. Procédé selon la revendication 1 ou 2, dans lequel, pour l'étape de détermination de la valeur de timeout (TO), une étape de détermination du nombre de véhicules impliqués dans la manoeuvre de conduite coopérative est exécutée et dans lequel le temps moyen d'aller simple requis pour envoyer un message d'un véhicule à un autre multiplié par le nombre de véhicules impliqués dans la manoeuvre de conduite coopérative est ajouté au temps moyen pour décider l'acceptation ou le rejet de la manoeuvre de conduite coopérative afin de calculer un temps de négociation (NT) pour la manoeuvre de conduite coopérative.

4. Procédé selon la revendication 3, dans lequel le temps moyen d'aller-retour pour le transfert sur réseau interne dans ledit véhicule (10A) ayant envoyé ledit message de coordination des manoeuvres (MCM) est ajouté au temps de négociation (NT) afin de déterminer le temps de négociation total.

5. Procédé selon la revendication 3 ou 4, dans lequel, dans ledit véhicule (10A) ayant envoyé ledit message de coordination des manoeuvres (MCM), le temps moyen d'aller simple requis pour envoyer un message d'un véhicule à un autre est adapté à l'estimation courante de la qualité de service du système de communication radio de véhicule à véhicule.

6. Procédé selon l'une quelconque des revendications 3 à 5, dans lequel, dans ledit véhicule (10A) ayant envoyé le message de demande de manoeuvre de conduite coopérative, ladite valeur de timeout (TO) est fixée au temps de négociation (NT) lorsqu'il s'avère que ledit véhicule demandeur (10A) atteindra le point de branchement (BP) avant que le temps de négociation (NT) n'ait expiré.

7. Procédé selon l'une quelconque des revendications précédentes, dans lequel ladite trajectoire prévue (PT) et ladite trajectoire désirée (DT) sont entrées dans un champ de charge utile du message de coordination des manoeuvres (MCM) afin d'informer lesdits véhicules impliqués (10B, 10C) à propos de la manoeuvre de conduite coopérative prévue.

8. Procédé selon l'une quelconque des revendications précédentes, dans lequel un desdits véhicules impliqués (10B, 10C) exécute une étape de vérification de ladite valeur de timeout (TO) dans le message de coordination des manoeuvres reçu (MCM) et, lorsqu'il trouve que le temps moyen pour décider l'acceptation ou le rejet de la manoeuvre de conduite coopérative est plus long que ladite valeur de timeout (TO) signalée, ledit véhicule impliqué (10B, 10C) arrêtera la négociation à propos de la manoeuvre de conduite coopérative et retransmettra audit véhicule demandeur (10A) un message dans lequel la manoeuvre de conduite coopérative est rejetée.

9. Unité informatique (180), **caractérisée en ce que** cette unité informatique (180) comprend un processeur adapté pour exécuter les étapes selon l'une quelconque des revendications 1 à 8.

10. Véhicule (30), **caractérisé en ce que** ce véhicule (30) est équipé d'une unité informatique (180) selon la revendication 9.

11. Programme informatique, **caractérisé en ce que** ce programme informatique comprend des instructions qui, lorsque ce programme informatique est exécuté par une unité informatique (180), lui font exécuter le procédé selon l'une quelconque des revendications 1 à 8.

Fig. 1

Fig. 2

Fig. 3

Fig. 4

M1       M2       M3          M4      M5

| PDUH | SP | PT | DT | TO |
|------|-----|-----|-----|-----|

**Fig. 5**

```
        ┌──────────┐
        │  Start   │────── NTE1
        └──────────┘
             │
             ▼
   ┌─────────────────────┐
   │ detm. No. of involved│────── NTE2
   │      vehicles        │
   └─────────────────────┘
             │
             ▼
   ┌─────────────────────┐
   │ detm. BP between PT &│────── NTE3
   │         DT           │
   └─────────────────────┘
             │
             ▼
   ┌─────────────────────┐
   │ detm. NT for neg. phase│──── NTE4
   └─────────────────────┘
             │
             ▼
       ╱─────────────╲
      ╱               ╲── NTE5
      ╲  BP time > NT? ╱  −
       ╲─────────────╱
             │ +
             ▼
   ┌─────────────────────┐
   │    TO := BP time     │────── NTE6
   └─────────────────────┘
             │
             ▼
   ┌─────────────────────┐
   │    req. Tx of MCM    │────── NTE7
   └─────────────────────┘
             │
             ▼
        ┌──────────┐
        │   End    │────── NTE8
        └──────────┘
```

**Fig. 6**

Fig. 7

EP 3 859 709 B1

**EP 3 859 709 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20190207800 A1

### Non-patent literature cited in the description

- A generic approach towards maneuver coordination for automated vehicles. **BERND LEHMANN** ; **HENDRIK-JÖRN GÜNTHER** ; **LARS WOLF**. 2018 21st International Conference on Intelligent Transportation Systems (ITSC). IEEE, 2018
- Autonomous Maneuver Coordination Via Vehicular Communication. **XU WENBO et al.** 2019 49TH ANNUAL IEEE/IFIP INTERNATIONAL CONFERENCE ON DEPENDABLE SYSTEMS AND NETWORKS WORKSHOPS (DSN-W). IEEE, 24 June 2019, 70-77
- Cooperative Collision Avoidance at Intersections: Algorithms and Experiments. **HAFNER MICHAEL R et al.** IEEE TRANSACTIONS ON INTELLIGENT TRANSPORTATION SYSTEMS. IEEE, 01 September 2013, vol. 14, 1162-1175
- Membership-based Manoeuvre Negotiation in Autonomous and Safety-critical Vehicular Systems. **ANTONIO CASIMIRO et al.** ARXIV.ORG. CORNELL UNIVERSITY LIBRARY, 201 OLIN LIBRARY CORNELL UNIVERSITY, 11 June 2019
- A vehicle-to-vehicle communication protocol for cooperative collision warning. **XUE YANG**. MOBILE AND UBIQUITOUS SYSTEMS: NETWORKING AND SERVICES, 2004. MOBIQUIT OUS 2004. THE FIRST ANNUAL INTERNATIONAL CONFERENCE ON BOSTON, MA, USA AUG. 22-26, 2004. IEEE, 22 August 2004, 1 14-123